# EUROPÄISCHE PATENTANMELDUNG

(11) **EP 0 864 593 A1**
(43) Veröffentlichungstag der Anmeldung: **16.09.1998**
(21) Anmeldenummer: 98103624.7
(22) Anmeldetag: 02.03.1998
(51) Int. Cl.: C08F 290/04, C08F 255/08, C08F 255/02, C08F 257/02, C08F 290/02, C08L 51/06

(54) **Kammpolymere via Metallocenkatalyse**

(30) Priorität: 11.03.1997 DE 19709667
(71) Anmelder: BASF AKTIENGESELLSCHAFT, 67056 Ludwigshafen (DE)
(72) Erfinder: Arnold, Manfred, Dr., 06217 Merseburg (DE); Henschke, Olaf, Dr., 06110 Halle (DE)

(57) **Zusammenfassung**

Verfahren zur Herstellung von kammartigen Polymeren durch Copolymerisation von einem oder mehreren Monomeren a), ausgewählt aus der Gruppe bestehend aus olefinisch ungesättigten C₂- bis C₁₈-Kohlenwasserstoffen und vinylaromatischen Verbindungen, mit einem oder mehreren Monomeren b), ausgewählt aus der Gruppe bestehend aus langkettigen C₂₀- bis C₄₀-Alk-1-enen und Makromonomeren in Gegenwart von Katalysatoren, dadurch gekennzeichnet, daß als Katalysatoren Metallocenkatalysatoren verwendet werden.

## Beschreibung

Die vorliegende Erfindung betrifft ein Verfahren zur Herstellung von kammartigen Polymeren durch Copolymerisation von einem oder mehreren Monomeren a), ausgewählt aus der Gruppe bestehend aus olefinisch ungesättigten C₂- bis C₁₈-Kohlenwasserstoffen und vinylaromatischen Verbindungen, mit einem oder mehreren Monomeren b) , ausgewählt aus der Gruppe bestehend aus langkettigen C₂₀- bis C₄₀-Alk-1-enen und Makromonomeren in Gegenwart von Katalysatoren. Weiterhin betrifft die vorliegende Erfindung kammartige Polymere erhältlich durch Copolymerisation von einem oder mehreren Monomeren a), ausgewählt aus der Gruppe bestehend aus olefinisch ungesättigten C₂- bis C₁₈-Kohlenwasserstoffen und vinylaromatischen Verbindungen, mit einem oder mehreren Monomeren b), ausgewählt aus der Gruppe bestehend aus langkettigen C₂₀- bis C₄₀-Alk-1-enen und Makromonomeren in Gegenwart von Katalysatoren, im folgenden erfindungsgemäße Kammpolymere genannt, sowie die Verwendung von kammartigen Polymeren als Verträglichkeitsvermittler in Polymermischungen und die Polymermischungen, enthaltend die erfindungsgemäßen kammartigen Polymeren, im folgenden erfindungsgemäße Polymermischungen genannt.

Um gewünschte Eigenschaften von Kunststoffen einzustellen, ist es in der Kunststofftechnik üblich, Reinpolymere mit verschiedenen physikalischen Eigenschaften zu vermischen. Aufgrund ihrer unterschiedlichen Struktur mischen sich jedoch viele Reinpolymere, beispielsweise Polyolefine und Polystyrol, nicht homogen. Inhomogene Polymermischungen haben im allgemeinen schlechtere mechanische und/oder optische Eigenschaften als die Basispolymeren der Mischung. Es ist bekannt, die Mischbarkeit von unterschiedlichen Polymeren mit Verträglichkeitsvermittlern oder Phasenvermittlern zu erhöhen.

Nach wie vor ist es ist jedoch unmöglich, vorauszusagen, welche Struktur die Phasenvermittler haben müssen, um ihre Funktion zu erfüllen.

Phasenvermittler für, üblicherweise unpolare, Polyolefin/Polystyrol-Mischungen sind nicht gut untersucht.

US 3,989,768 beschreibt die Copolymerisation von Ethylen und Propylen mit Makromonomeren aus α-Methylstyrol, welche mit Allylendgruppen versehen sind, in Gegenwart von Vanadium-Katalysatoren. Dieses Verfahren hat aber einige Nachteile. Einerseits sind die Vanadiumkatalysatoren nicht produktiv genug, d.h. die Ausbeute an Polymer läßt zu wünschen übrig. Ferner ist der Einbau der Makromonomeren in die Polymerkette nicht gleichmäßig genug und die Molekulargewichte der Copolymere sind noch ungenügend, insbesondere hinsichtlich Anwendungen in Polymermischungen.

Der vorliegenden Erfindung lag daher die Aufgabe zugrunde, den geschilderten Mängeln abzuhelfen und kammartige Copolymere zur Verfügung zu stellen, welche ein hohes Molekulargewicht und gleichmäßige Comonomerverteilung in der Polymerkette haben, sich als Verträglichkeitsvermittler in Polymermischungen eignen und in einem produktiven Verfahren herstellbar sind.

Demgemäß wurde ein Verfahren zur Herstellung von kammartigen Polymeren durch Copolymerisation von einem oder mehreren Monomeren a), ausgewählt aus der Gruppe bestehend aus olefinisch ungesättigten C₂- bis C₁₈-Kohlenwasserstoffen und vinylaromatischen Verbindungen, mit einem oder mehreren Monomeren b), ausgewählt aus der Gruppe bestehend aus langkettigen C₂₀- bis C₄₀-Alk-1-enen und Makromonomeren in Gegenwart von Katalysatoren, dadurch gekennzeichnet, daß als Katalysatoren Metallocenkatalysatoren verwendet werden, gefunden. Weiterhin wurden kammartige Polymere erhältlich durch Copolymerisation von einem oder mehreren Monomeren a), ausgewählt aus der Gruppe bestehend aus olefinisch ungesättigten C₂- bis C₁₈-Kohlenwasserstoffen und vinylaromatischen Verbindungen, mit einem oder mehreren Monomeren b), ausgewählt aus der Gruppe bestehend aus langkettigen C₂₀- bis C₄₀-Alk-1-enen und Makromonomeren in Gegenwart von Katalysatoren, wobei als Katalysatoren Metallocenkatalysatoren verwendet werden, die Verwendung von kammartigen Polymeren als Verträglichkeitsvermittler in Polymermischungen, sowie Polymermischungen, enthaltend kammartige Polymerisate, gefunden.

Die erfindungsgemäßen Kammpolymere zeichnen sich dadurch aus, daß sie eine sogenannte Rückgratkette haben von welcher mindestens ein Seitenast, vorzugsweise mehrere Seitenäste, mit definierter Länge abzweigt bzw. abzweigen.

Im erfindungsgemäßen Verfahren werden diese Kammpolymeren erhalten, indem man Monomere a), die in der Regel das Rückgrat der erfindungsgemäßen Kammpolymeren bilden, mit langkettigen Monomeren b), welche in der Regel die Seitenketten bilden, in Gegenwart eines Metallocenkatalysators copolymerisiert.

Monomere des Typs a) sind alle, mit einem Metallocenkatalysator polymerisierbaren Monomere, vorzugsweise solche, welche eine terminale Kohlenstoff-Kohlenstoff-Doppelbindung, insbesondere eine des Vinyl- oder Vinylidentyps haben.

Gut geeignet als Monomer a) sind olefinisch ungesättigte C₂- bis C₁₈-Kohlenwasserstoffe mit cyclischer oder vorzugsweise linearer Struktur, sowie C₈- bis C₁₆-vinylaromatische Verbindungen. Bei den C₂- bis C₁₈-Kohlenwasserstoffen seien lineare oder cyclische C₂-bis C₁₈-Monoene und lineare oder cyclische C₄- bis C₁₈-Polyene, vorzugsweise Diene, genannt.

Gut geeignete olefinisch ungesättigte Kohlenwasserstoffe sind C₂-bis C₁₀-Alk-1-ene, wie Ethylen, Propylen, 1-Buten, iso-Buten, 1-Hexen, 1-Octen, 1-Decen, Cyclopenten, Cyclohexen, Cycloocten, Norbornen, 1,3-Butadien, 1,5-Cyclooctadien, Norbornadien, 5-Vinyl-2-norbornen, 5-Phenyl-2-norbornen, Dimethanooctahydronaphthalin.

Ganz besonders bevorzugt als Monomer a) sind Ethylen, Propylen, 1-Buten, 1-Hexen, Norbornen.

Als gut geeignete vinylaromatische Verbindungen seien Styrol, α-Methylstyrol, Divinylbenzol, 2-Vinylnaphthalin genannt.

Ein bevorzugtes vinylaromatisches Monomer a) ist Styrol.

Selbstverständlich können die genannten Monomere a) auch als Mischung zur Copolymerisation verwendet werden, wobei die Mischungsverhältnisse nicht kritisch sind. Bevorzugte Mischungen sind Mischungen aus Propylen mit einem weiteren Monomer aus der Gruppe a), vorzugsweise Ethylen, 1-Buten, 1-Hexen, 1-Octen oder Norbornen.

Ganz besonders bevorzugt verwendet man jedoch nur eine Sorte des Monomeren a) zum Aufbau der Polymerrückgratkette, insbesondere verwendet man Propylen als Monomer a).

Als Monomere b) sind solche geeignet, welche mit den Monomeren a), in Gegenwart eines Metallocenkatalysators, copolymerisierbar sind. Vorzugsweise haben diese Monomeren eine terminale Kohlenstoff-Kohlenstoff-Doppelbindung, insbesondere eine des Vinyl- oder Vinylidentyps. Ein unterscheidendes Merkmal der Monomeren b) gegenüber den Monomeren a) ist im allgemeinen ihre Kettenlänge oder ihr Polymerisationsgrad. Die Monomeren b) haben üblicherweise ein höheres Molekulargewicht als die Monomeren a). Vorzugsweise ist das Molekulargewicht Mₙ der Monomeren b) um den Faktor 3 bis 2000 größer als das der Monomeren a).

Gut geeignete Monomere b) sind langkettige C₂₀- bis C₄₀-Monoolefine beispielsweise 1- Eicosen.

Besonders bevorzugte Monomere b) sind jedoch Makromonomere, also aus Monomeren aufgebaute Oligomere mit einem funktionellen, copolymerisierbaren Kettenende, vorzugsweise Vinyl- oder Vinylidenendgruppen.

Die den Makromonomeren zugrunde liegenden Monomeren können aus der Gruppe der Monomeren a) ausgewählt werden. Die Makromonomere können Homo- oder Cooligomere aus diesen Monomeren sein vorzugsweise sind es Homo-Oligomere. Bevorzugte, den Makromonomeren zugrunde liegende Monomere, sind solche, welche sich mittels kationisch oder anionisch initiierter, lebender Polymerisation polymerisieren lassen. Gut geeignete Monomere b) sind daher vinylaromatische Kohlenwasserstoffe, vorzugsweise Styrol, oder α-Methylstyrol, 2-Vinylnaphthalin, 1,3-Butadien, Isopren sowie iso-Butylen.

Iso-Butylen wird im allgemeinen mittels lebender, kationischer Polymerisation, wie in J.P. Kennedy et al., Polymer 6 (1995), Seite 579 ff beschrieben, zu Polyisobutylen der Molekulargewichte von 300 bis 50000, vorzugsweise von 1000 bis 20000 g/mol polymerisiert. Die Molekulargewichtsverteilung Mw/Mn der so erhaltenen Polyisobutylene liegt im allgemeinen im Bereich von 1,05 bis 2,0. Als Initiator kann 2-Chlor-2,4,4-trimethylpentan verwendet werden, als Funktionalisierungsagenz zur Einführung der ungesättigten Endgruppe wird das lebende Polymere üblicherweise mit Allylsilanen, wie Allyltrimethylsilan umgesetzt.

Styrol wird im allgemeinen mittels lebender, anionischer Polymerisation mit, beispielsweise n-Butyllithium oder sec-Butyllithium als Initiator, wie in M. Swarc, J. Am. Chem. Soc., 78, 2656 ff (1956) beschrieben, zum Polystyrolanion polymerisiert und die lebenden Polymerketten, welche im allgemeinen ein Molekulargewicht Mn von 300 bis 50000, vorzugsweise von 1000 bis 20000 g/mol und eine Molekulargewichtsverteilung Mw/Mn von 1,05 bis 1,5 haben werden dann in der Regel am Kettenende funktionalisiert. Hierzu setzt man im allgemeinen die lebenden Polystyrolanionen mit elektrophilen Allyl- oder Vinylverbindungen, wie Allylchlorid oder Vinylbenzylchlorid um.

Die mittleren Molekulargewichte Mw und Mn, und Molekulargewichtsverteilungen Mw/Mn werden im allgemeinen mit der Methode der Hochtemperatur-Gelpermeationschromatographie (GPC) bei 135°C in 1,2,4-Trichlorbenzol mit Polystyrol als Standard bestimmt.

Das erfindungsgemäße Polymerisationsverfahren wird in Gegenwart von Metallocenkatalysatoren durchgeführt, wobei als Metallocenkatalysatoren solche katalytisch aktiven Übergangsmetallverbindungen zu verstehen sind, welche mindestens einen Cyclopentadienylliganden, oder mindestens einen, von der Cyclopentadienylstruktureinheit abgeleiteten Liganden haben. Üblicherweise enthalten die Katalysatoren noch metallocenkationbildende Verbindungen, auch als Cokatalysatoren bezeichnet.

Als den Metallocenkatalysatoren zugrundeliegenden Metallocenkomplexe eigenen sich besonders solche der allgemeinen Formel III 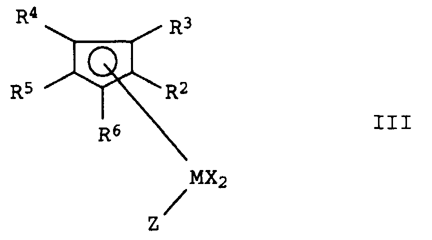 in der die Substituenten folgende Bedeutung haben:
- M: Titan, Zirkonium, Hafnium, Vanadium, Niob oder Tantal
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁷ oder -NR⁷R⁸,
wobei
- R⁷ und R⁸: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R² bis R⁶: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁹)₃ mit
- R⁹: C₁- bis C₁₀-Alkyl, C₃- bis C₁₀-Cycloalkyl oder C₆- bis C₁₅-Aryl,
- Z: für X oder 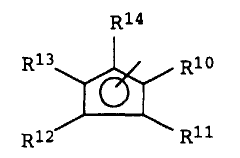 steht,
wobei die Reste
- R¹⁰ bis R¹⁴: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁵)₃ mit
- R¹⁵: C₁- bis C₁₀-Alkyl, C₆- bis C₁₅-Aryl oder C₃- bis C₁₀-Cycloalkyl,
oder wobei die Reste R⁵ und Z gemeinsam eine Gruppierung -R¹⁶-A-bilden, in der
- R¹⁶: 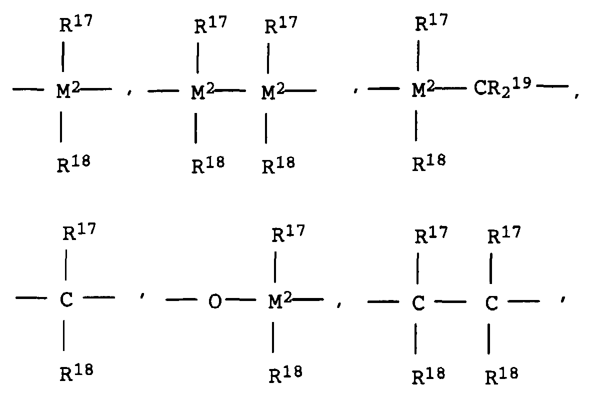
= BR¹⁷, = AlR¹⁷, -Ge-, -Sn-, -O-, -S-, = SO, = SO₂, = NR¹⁷, = CO, = PR¹⁷ oder = P(O)R¹⁷ ist, wobei
- R¹⁷, R¹⁸ und R¹⁹: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluor-arylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Aryl-alkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A: ― O ― , ― S ―, 〉NR²⁰ oder 〉R²⁰ bedeuten, mit
- R²⁰: C₁- bis C₁₀-Alkyl, C₆- bis C₁₅-Aryl, C₃- bis C₁₀-Cycloalkyl, Alkylaryl oder Si(R²¹)₃,
- R²¹: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁵ und R¹³ gemeinsam eine Gruppierung -R¹⁶-bilden.

Von den Metallocenkomplexen der allgemeinen Formel III sind 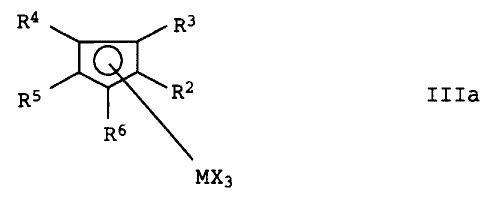 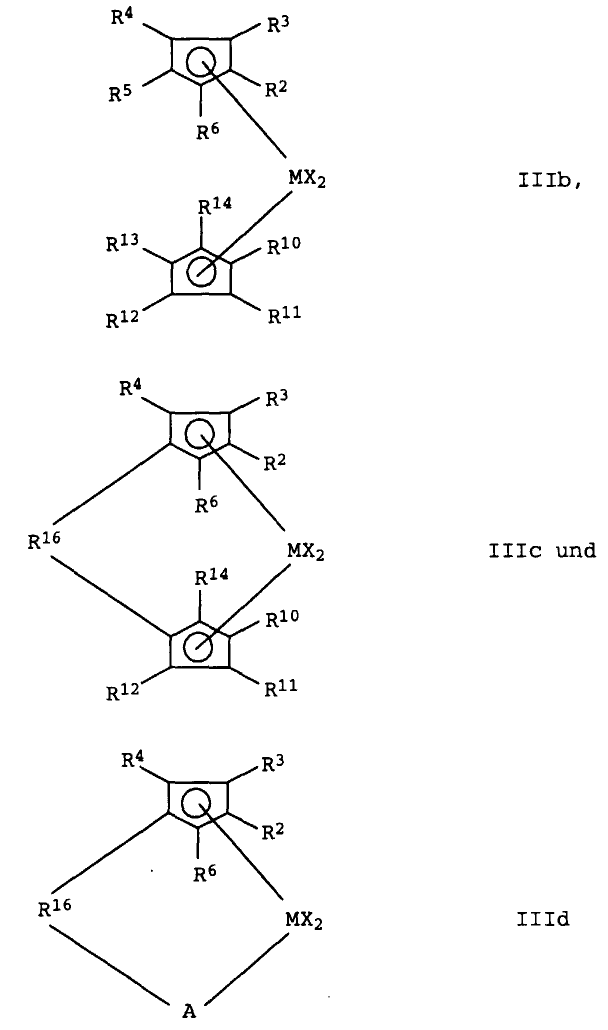 bevorzugt.

Besonders bevorzugt sind solche Übergangsmetallkomplexe, welche zwei miteinander verbrückte aromatische Ringsysteme als Liganden enthalten, also besonders die Übergangsmetallkomplexe der allgemeinen Formeln IIIc und IIId.

Die Reste X können gleich oder verschieden sein, bevorzugt sind sie gleich.

Von den Verbindungen der Formel IIIa sind insbesondere diejenigen bevorzugt, in denen
- M: Titan, Zirkonium oder Hafnium,
- X: Chlor, C₁-bis C₄-Alkyl oder Phenyl und
- R² bis R⁶: Wasserstoff oder C₁- bis C₄-Alkyl bedeuten.

Von den Verbindungen der Formel IIIb sind als bevorzugt diejenigen zu nennen, bei denen
- M: für Titan, Zirkonium oder Hafnium steht,
- X: für Chlor, C₁-bis C₄-Alkyl oder Phenyl,
- R² bis R⁶: Wasserstoff, C₁- bis C₄-Alkyl oder Si(R⁹)₃,
- R¹⁰ bis R¹⁴: Wasserstoff, C₁- bis C₄-Alkyl oder Si(R¹⁵)₃ bedeuten.

Insbesondere sind die Verbindungen der Formel IIIb geeignet, in denen die Cyclopentadienylreste gleich sind.

Beispiele für besonders geeignete Verbindungen sind u.a.: Bis(cyclopentadienyl)zirkoniumdichlorid, Bis(pentamethylcyclopentadienyl)-zirkoniumdichlorid, Bis(methylcyclopentadienyl)-zirkoniumdichlorid, Bis(ethylcyclopentadienyl)-zirkoniumdichlorid, Bis(n-butylcyclopentadienyl)-zirkoniumdichlorid und Bis(trimethylsilylcyclopentadienyl)-zirkoniumdichlorid sowie die entsprechenden Dimethylzirkoniumverbindungen.

Von den Verbindungen der Formel IIIc sind diejenigen besonders geeignet, in denen
- R² und R¹⁰: gleich sind und für Wasserstoff oder C₁- bis C₁₀-Alkylgruppen stehen,
- R⁶ und R¹⁴: gleich sind und für Wasserstoff, eine Methyl-, Ethyl-, iso-Propyl- oder tert. -Butylgruppe stehen
- R³, R⁴, R¹¹ und R¹²: die Bedeutung
R⁴ und R¹² C₁- bis C₄-Alkyl
R³ und R¹¹ Wasserstoff
haben oder zwei benachbarte Reste R³ und R⁴ sowie R¹¹ und R¹² gemeinsam für 4 bis 12 C-Atome aufweisende cyclische Gruppen stehen,
- R¹⁶: für 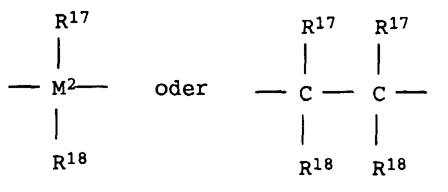 steht,
- M: für Titan, Zirkonium oder Hafnium und
- X: für Chlor, C₁-bis C₄-Alkyl oder Phenyl stehen.

Beispiele für besonders geeignete Komplexverbindungen sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiylbis(-3-tert.butyl-5-ethylcyclopentadienyl)-zirkoniumdichlorid, Dimethylsilandiylbis(-2-methylindenyl)-zirkoniumdichlorid, Dimethylsilandiylbis(-2-isopropylindenyl)-zirkoniumdichlorid, Dimethylsilandiylbis(-2-tert.butylindenyl)-zirkoniumdichlorid, Diethylsilandiylbis(-2-methylindenyl)-zirkoniumdibromid, Dimethylsilandiylbis(-3-methyl-5-methylcyclopentadienyl)-zirkoniumdichlorid, Dimethylsilandiylbis(-3-ethyl-5-isopropylcyclopentadienyl)-zirkoniumdichlorid, Dimethylsilandiylbis(-2-methylindenyl)-zirkoniumdichlorid, Dimethylsilandiylbis(-2-methylbenzindenyl)-zirkoniumdichlorid Dimethylsilandiylbis(2-ethylbenzindenyl)zirkoniumdichlorid, Methylphenylsilandiylbis(2-ethylbenzindenyl)zirkoniumdichlorid, Methylphenylsilandiylbis(2-methylbenzindenyl)zirkoniumdichlorid, Diphenylsilandiylbis(2-methylbenzindenyl)zirkoniumdichlorid, Diphenylsilandiylbis(2-ethylbenzindenyl)zirkoniumdichlorid, und Dimethylsilandiylbis(-2-methylindenyl)-hafniumdichlorid sowie die entsprechenden Dimethylzirkoniumverbindungen.

Bei den Verbindungen der allgemeinen Formel IIId sind als besonders geeignet diejenigen zu nennen, in denen
- M: für Titan oder Zirkonium,
- X: für Chlor, C₁-bis C₄-Alkyl oder Phenyl stehen.
- R¹⁶: für 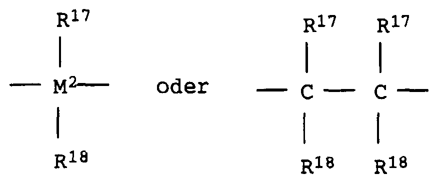 steht,
- A: für ― O ― , ― S―, 〉NR²⁰
und
- R² bis R⁴ und R⁶: für Wasserstoff, C₁- bis C₁₀-Alkyl, C₃- bis C₁₀-Cycloalkyl, C₆- bis C₁₅-Aryl oder Si(R⁹)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als weitere Komponente enthält der nach dem erfindungsgemäßen Verfahren hergestellte Katalysator eine metalloceniumionenbildende Verbindung.

Geeignete metalloceniumionen-bildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel IV

M³X¹X²X³ IV

bevorzugt, in der
- M³: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X¹, X² und X³ gleich sind, vorzugsweise Tris(pentafluorphenyl)boran.

Als ionische Verbindungen mit lewissauren Kationen sind Verbindungen der allgemeinen Formel V

[(Y^{a+})Q₁Q₂...Q_{z}]^{d+} V

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Besonders geeignet als metalloceniumionen-bildende Verbindung sind offenkettige oder cyclische Alumoxanverbindungen der allgemeinen Formel I oder II 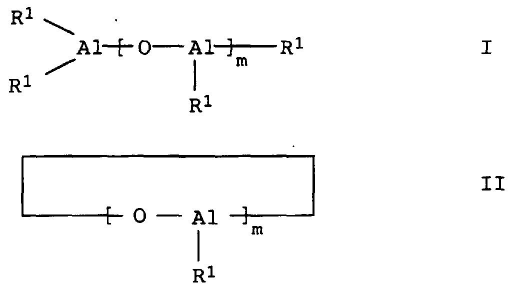
- wobei R¹: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Weiterhin können als metalloceniumionen-bildende Verbindungen Aryloxyalumoxane, wie in der US-A 5,391,793 beschrieben, Aminoaluminoxane, wie in der USA-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Besonders bevorzugte Metallocenkomplexe sind Ethylen(bisindenyl)hafniumdichlorid und Dimethylsilandiylbis-(2-Methyl-4,5-benzindenyl)zirconiumdichlorid. Ganz besonders bevorzugte Metallocenkatalysatoren sind Ethylen(bisindenyl)hafniumdichlorid/Methylaluminoxan- und Dimethylsilandiylbis-(2-Methyl-4,5-benzindenyl)zirconiumdichlorid/Methylaluminoxan-Katalysatoren.

Das erfindungsgemäße Verfahren zur Herstellung der erfindungsgemäßen Kammpolymeren wird in der Regel bei Temperaturen im Bereich von -50 bis 300°C, vorzugsweise im Bereich von 0 bis 150°C, insbesondere im Bereich von 0 bis 100°C und bei Drücken im Bereich von 0,01 bis 3000 bar, vorzugsweise 0,1 bis 100 bar, insbesondere 0,1 bis 50 bar durchgeführt.

Die Polymerisation kann in Lösung, in Suspension, in den flüssigen Monomeren oder in der Gasphase durchgeführt werden. Bevorzugt erfolgt die Polymerisation in Lösung oder in den flüssigen Monomeren. Geeignete Lösungsmittel für die Lösungspolymerisation sind aliphatische oder aromatische, organische Lösungsmittel, die auch halogeniert sein können. Beispielsweise seien Toluol, Ethylbenzol, Chlorbenzol, Heptan genannt.

Das erfindungsgemäße Polymerisationsverfahren kann kontinuierlich oder diskontinuierlich durchgeführt werden. Geeignete Reaktoren sind unter anderem kontinuierlich betriebene Rührkessel, wobei man gegebenenfalls auch eine Reihe von mehreren, hintereinandergeschalteten Rührkesseln verwenden kann (Reaktorkaskade), ferner Rohrreaktor oder Schlaufenreaktor.

Die Mengenverhältnisse von Monomer a) zu Monomer b) während der Polymerisation sind nicht kritisch. Im allgemeinen wählt man ein molares Verhältnis von Gesamtmenge Monomer a) zu Gesamtmenge Monomer b) im Bereich von 0,1 bis 100, vorzugsweise im Bereich von 1 bis 50.

Der Umsatz der Monomeren b) liegt üblicherweise im Bereich von 1 bis 100 Gew. -%, vorzugsweise im Bereich von 5 bis 90 Gew. -%.

Der Anteil der chemisch gebundenen Monomere b), bestimmt mit der Methode der Hochtemperatur-Gelpermeationschromatografie durch Flächenvergleich der für die Kammpolymere erhaltenen Kurven mit denen von Homopolymerstandards, in den erfindungsgemäßen Kammpolymeren liegt im Bereich von 0,5 bis 90 Gew.-%, vorzugsweise im Bereich von 5 bis 75 Gew.-%.

Die mittleren Molekulargewichte Mw und Mn, und Molekulargewichtsverteilungen Mw/Mn der erfindungsgemäßen Kammpolymere werden im allgemeinen mit der Methode der Hochtemperatur-Gelpermeationschromatographie (GPC) bei 135°C in 1,2,4-Trichlorbenzol mit Polystyrol als Standard bestimmt.

Das mittlere Molekulargewicht Mw der erfindungsgemäßen Kammpolymere liegt in der Regel im Bereich von 5000 bis 1000000, vorzugsweise im Bereich von 10000 bis 500000 g/mol. Die Molekulargewichtsverteilung Mw/Mn der erfindungsgemäßen Kammpolymere liegt üblicherweise im Bereich von 1,4 bis 10, vorzugsweise im Bereich von 1,4 bis 3.

Die erfindungsgemäßen Kammpolymere haben üblicherweise einen Schmelzpunkt im Bereich von 20 bis 160°C, vorzugsweise im Bereich von 80 bis 155°C und eine Glasübergangstemperatur oder mehrere, vorzugsweise zwei getrennte Glasübergangstemperaturen im Bereich von -100 bis 250°C und vorzugsweise im Bereich von -70 bis 100°C, gemessen mit der Methode der Differential Scanning Calometry (DSC).

Ganz besonders bevorzugte erfindungsgemaße Kammpolymere sind solche mit Polypropylenrückgrat und Seitenästen, entweder aus Polystyrol oder Polyisobutylen. Das Molekulargewicht Mw derartiger Copolymerer liegt im Bereich von 5000 bis 1000000, vorzugsweise im Bereich von 10000 bis 500000 g/mol, das Molekulargewicht Mn der Seitenäste liegt im Bereich von 500 bis 50000, vorzugsweise im Bereich von 2000 bis 20000 g/mol und die Molekulargewichtsverteilung, der den Seitenästen zugrunde liegenden Makromonomere, liegt üblicherweise im Bereich von 1,05 bis 2,0, vorzugsweise im Bereich von 1,05 bis 1,4. Die Pfropfastzahl, berechnet aus dem Mengenanteil der Seitenäste am Kammpolymeren und der Gesamtmolmasse Mₙ der bevorzugten erfindungsgemäßen Kammpolymere, liegt im Bereich von 0,05 bis 50, vorzugsweise im Bereich von 1 bis 20 und ihr Anteil an chemisch gebundenem Makromonomer Polystyrol oder Polyisobutylen, liegt im Bereich von 0,5 bis 90 Gew.-%, vorzugsweise im Bereich von 5 bis 75 Gew.-%.

Die bevorzugten erfindungsgemäßen Kammpolymere mit Polypropylenrückgrat und Polystyrol- oder Polyisobutylenseitenästen, haben üblicherweise einen Schmelzpunkt im Bereich von 100 bis 160°C, vorzugsweise im Bereich von 120 bis 155°C und eine Glasübergangstemperatur im Bereich von -70 bis 100°C.

Die erfindungsgemäßen Kammpolymere können noch 5 bis 50 Gew.-%, bezogen auf die Menge aller Polymeren, unumgesetztes Monomer b) enthalten, vorzugsweise sind sie jedoch praktisch frei von Monomer b).

Die erfindungsgemäßen Kammpolymere können in Polymermischungen aus zwei oder mehr Komponenten, auch Polymerblends genannt, als Verträglichkeitsvermittler oder Phasenvermittler eingesetzt werden. Grundsätzlich können alle Polymere als Bestandteil der Polymermischungen verwendet werden, also Thermoplaste wie Polyolefine, Polystyrol, Polyamid, Polyester, Polycarbonat, Polyvinylchlorid und Elastomere wie Polyisobutylen, Polybutadien, Polyisopren. Vorzugsweise können die erfindungsgemäßen Kammpolymere in Polymermischungen aus unpolaren Kohlenwasserstoffpolymeren verwendet werden, insbesondere in Polymermischungen aus Polyolefinen und Poly(vinylaromat)en. Als Polyolefine kommen Polyethylentypen, wie PE-HD, PE-LLD oder PE-LD in Betracht, ferner Propylen-Homo- oder Copolymerisate oder auch Polyisobutylen. Diese Polymere sind dem Fachmann bekannt und beispielsweise in Ullmann's Encyclopedia of Industrial Chemistry, Bd. 21, Seiten 487 bis 577 VCH (1992) beschrieben. Als Poly(vinylaromat)en sind vor allem Styrol- oder α-Methylstyrol- Homo- und Copolymere zu nennen, die ebenfalls dem Fachmann bekannt sind. Besonders bevorzugt können die erfindungsgemäßen Kammpolymeren, insbesondere jene mit Polypropylenrückgrat und Polystyrol- oder Polyisobutylenseitenkette, in Polymermischungen aus Propylenpolymerisaten, insbesondere Homopolypropylen, und Styrolpolymeristen, insbesondere Homopolystyrol, verwendet werden.

Die Mischungsverhältnisse der Basispolymeren in den Polymermischungen sind in der Regel nicht kritisch. Bei Polymermischungen aus Propylenpolymerisaten und Styrolpolymerisaten liegen sie beispielsweise im Bereich von 1 bis 99 Gew.-%, vorzugsweise im Bereich von 5 bis 20 Gew.-%.

Der Gehalt der erfindungsgemäßen Kammpolymere, insbesondere jener mit Polypropylenrückgrat und Polystyrol- oder Polyisobutylenseitenästen, in den Polymermischungen, insbesondere in den Mischungen aus Propylenpolymerisaten und Styrolpolymeristen ist nicht kristisch. Üblicherweise liegt er im Bereich von 0,001 bis 50 Gew.-%, vorzugsweise im Bereich von 0,2 bis 20 Gew.-%, bezogen auf die Gewichtssumme der Basispolymeren.

Die erfindungsgemäßen Polymermischungen können noch die üblichen, in der Kunststofftechnik bekannten, Additive in den üblichen Mengen enthalten.

Die erfindungsgemäßen Kammpolymeren bewirken im allgemeinen, unter anderem, eine Verbesserung der Steifigkeit, Zugfestigkeit und/oder Reißdehnung von Probekörpern, welche aus den erfindungsgemäßen Polymermischungen hergestellt wurden.

### Beispiele

### A) Herstellung der Makromonomere

### Beispiel 1

### Herstellung von Makromonomeren des Styrols mit Vinylendgruppe

In einen trockenen und mit Argon gespülten Kolben wurden 200 ml trockenes Toluol und 18 ml (157 mmol), für Makromonomer SI und 19,4 ml (169 mmol), für Makromonomer SO, frisch destilliertes Styrol gegeben.

Dann wurden bei 25°C wenige Tropfen einer 2M Lösung von sec. - Butyllithium in Toluol zugegeben, bis eine leichte Färbung stabil blieb, worauf 2 ml der Initiatorlösung hinzugefügt wurden.

Nach einer Stunde wurde auf -78°C gekühlt und mit 100 ml THF verdünnt. Die Lösung der lebenden Polyanionen wurde anschließend zu eine ebenfalls auf -78°C gekühlten Lösung von 7 ml (80 mmol) Allylbromid in 100 ml Toluol und 100 ml THF gegeben.

Es wurden 16,3 g eines vollständig allylfunktionalisierten Polystyrol SI (Mₙ = 4000 g/mol, M_{w}/Mₙ = 1,08) und 17,5 g an SO erhalten.

Die Eigenschaften der so hergestellten Makromonomere des Styrols sind in Tabelle 1 zusammengestellt.

### Beispiel 2

### Herstellung der Makromonomeren des iso-Butylens mit Vinylendgruppen

Ein trockener Kolben wurde mit Argon gespült. Anschließend wurden 250 ml trockenes Methylenchlorid, 0,75 g (4,5 mmol (2,2'-Bi-pyridyl und 350 ml trockenes n-Hexan hineingegeben. Danach wurde auf -78°C gekühlt.

Dann wurden 12 ml (0,11 mol) Titantetrachlorid und nach 5 min 10 ml einer Lösung von 1,5 g 2-Chlor-2,4,4-trimethylpentan in 6 ml Methylenchlorid und 9 ml n-Hexan (6,75 mmol) zugegeben. Anschließend wurden 44 ml (31,7 g) Isobuten für Makromonomerer IBI und 71 ml (51,3 g) für Makromonomer IBII tropfenweise zugegeben.

Nach 10 min erfolgte die Zugabe von 5 g (43 mmol) Allyltrimethylsilan. Nach weiteren 30 min wurden 50 ml Methanol zugegeben.

Nach Aufarbeitung wurden 31 g eines vollständig allylfunktionalisierten Polyisobutylen IBI (Mₙ = 4700 g/mol, M_{w}/Mₙ = 1,16) und 50 g IBII Makromonomer erhalten.

Die Eigenschaften der so hergestellten Makromonomere des iso-Butylens sind in Tabelle 1 zusammengestellt.

**Tabelle 1**

| Polystyrol- und Polyisobutylen-Makromonomere mit Vinylendgruppen | | | | | |
|---|---|---|---|---|---|
| Bez.^{a)} | Mₙ (g/mol) | M_{w} (g/mol) | M_{w}/Mₙ | Endgruppe | Funktionalität^{c)} (%) |
| SO | 4300 | 4600 | 1,06 | Vinylbenzyl^{b)} | > 95 |
| SI | 4000 | 4400 | 1,08 | Allyl | > 95 |
| IBI | 4700 | 5500 | 1,16 | Allyl | > 95 |
| IBII | 7600 | 9300 | 1,23 | Allyl | > 95 |

| | | | | | |
|---|---|---|---|---|---|
| ^{a)} S = Polystyrol-Makromonomer; IB = Polyisobutylen-Makromonomer | | | | | |
| ^{b)} durch Umsetzung von PSLi mit Vinylbenzylchlorid synthetisiert | | | | | |
| ^{c)} Die Endgruppenfunktionalität der Polystyrol-Makromonomere wurde mit Hilfe der ¹H-NMR-Spektroskopie durch Vergleich der Signalintensität der Protonen an der endständigen Doppelbindung mit der Signalintensität der Methylprotonen des Initiatorrestes am Kettenanfang ermittelt. | | | | | |

### B) Herstellung der erfindungsgemäßen Kammpolymeren

### Beispiel 3

### Copolymerisation von Propylen mit Makromonomeren des Styrols in Gegenwart von Dimethylsilandiyl-bis-(2-Methyl-4,5-benzindenyl)zirconiumdichlorid/Methylaluminoxan

Ein trockener 0,5 l-Reaktor wurde mit Argon gespült und bei 20°C mit 200 ml trockenem Toluol gefüllt.

Dann wurden bei einem Argonüberdruck von 0,3 bar 1,9 ml toluolische Methylaluminoxanlösung (entsprechend 3,3 mmol Al, Molmasse nach kryoskopischer Bestimmung 1000 g/mol) und anschließend 2,5 g des Makromonomeren SI (entsprechend 0,625 mmol), gelöst in 50 ml trockenem Toluol, zugegeben.

Dann erfolgte die Zugabe von Dimethylsilandiylbis(2-methyl-4,5-benzindenyl)zirconiumdichlorid, gelöst in 1 ml toluolischer Methylaluminoxanlösung, nach Voraktivierung durch zweistündiges Stehenlassen; Menge des Metallocenchlorids siehe Tabelle 2.

Danach wurde durch Anlegen von Vakuum das Argon entfernt und 0,1 bar Propendruck eingestellt. Der Druck wurde während der Polymerisation durch entsprechende Zufuhr von Propen bei 0,1 bar, die Temperatur bei 20°C gehalten.

Es wurden die Kammpolymeren in den in Tabelle 2 ersichtlichen Ausbeuten erhalten.

Die Ergebnisse der Versuche sind in Tabelle 2 zusammengestellt.

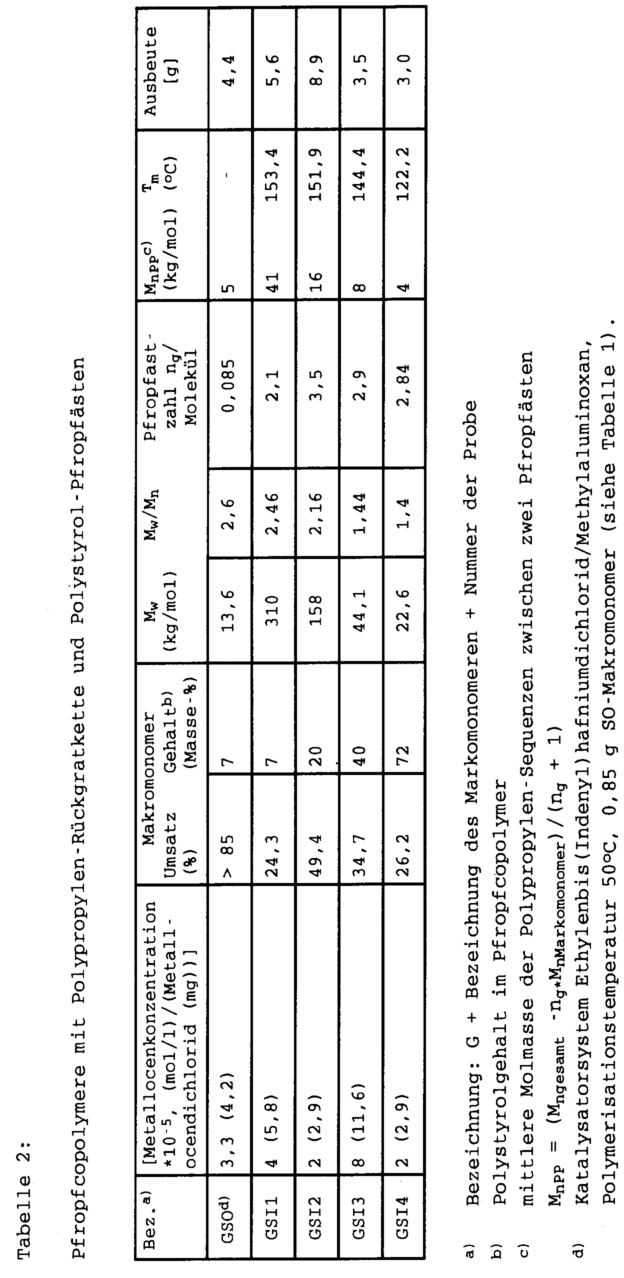

### Beispiel 4

### Copolymerisation von Propylen mit Makromonomeren des iso-Butylens in Gegenwart von Dimethylsilandiyl-bis-(2-Methyl-4,5-benzindenyl) zirconium-dichlorid/Methylaluminoxan

Ein trockener 0,5-l-Reaktor wurde mit Argon gespült und bei 20°C mit 200 ml trockenem Toluol gefüllt.

Dann wurden bei einem Argonüberdruck von 0,3 bar, 1,9 ml toluolische Methylaluminoxanlösung (entsprechend 3,3 mmol Al, Molmasse nach kryoskopischer Bestimmung 1000 g/mol) und anschließend 8,3 g des Makromonomeren IBII (entsprechend 1,09 mmol), gelöst in 50 ml trockenem Toluol, zugegeben.

Dann erfolgte die Zugabe von 2,9 mg Dimethylsilandiylbis(2-Methyl-4,5-benzindenyl)zirconiumdichlorid, gelöst in 1 ml toluolischer Methylaluminoxanlösung, nach Voraktivierung durch zweistündiges Stehenlassen.

Danach wurde durch Anlegen von Vakuum das Argon entfernt und 0,15 bar Propendruck eingestellt. Der Druck wurde während der Polymerisation durch entsprechende Zufuhr von Propen bei 0,15 bar, die Temperatur bei 20°C gehalten.

Es wurden 12,0 g des Kammpolymeren GIBII1 erhalten.

Entsprechend wurden mit 0,1 bar Propendruck das Copolymere GIBII2, hergestellt.

Weiterhin wurden entsprechend mit 12,8 g (2,7 mmol) Makromonomeren IBI mit einem Propendruck von 0,2 bar das Copolymer GIBI1 und mit einem Propendruck von 0,1 bar das Copolymer GIBI2 hergestellt. Weiteres siehe Tabelle 3.

Die Ergebnisse der Versuche sind in Tabelle 3 zusammengestellt.

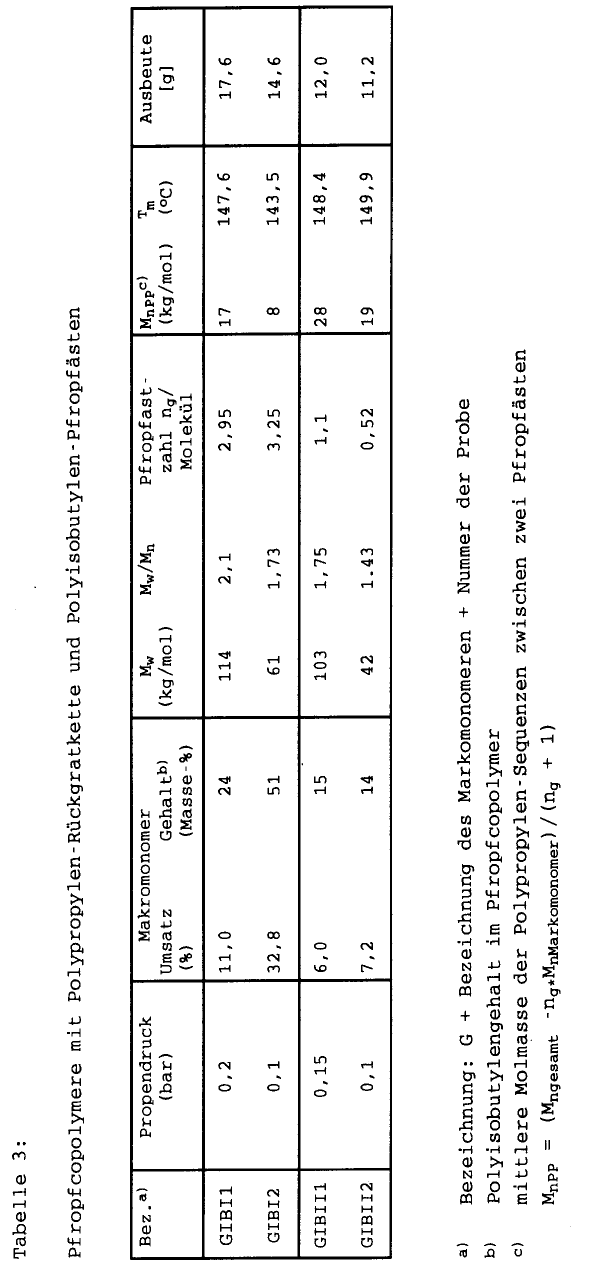

### C) Herstellung von Polypropylen/Polystyrol/Kammpolymer-Mischungen

Es wurde Homopolypropylen Shell KF 6100 H (Mw 324 000, Mn 72 000 Mw/Mn 4,5) und Homopolystyrol Buna PS-S134 (Mw 213 000, Mn 94 000, Mw/Mn 2,27) als Basispolymer verwendet. Diese wurden im Mengenverhältnis 85 Gew.-% Polypropylen und 15 Gew.-% Polystyrol eingesetzt.

Als Verträglichkeitsvermittler wurden unterschiedliche Mengen der erfindungsgemäßen Kammpolymeren mit Polypropylenrückgrat und unterschiedlichem Gehalt an Polystyrol-Seitenästen, jedoch einheitlicher Polystyrol-Pfropfastlänge von Mn 4000 verwendet, die analog Beispiel 3 hergestellt wurden, näheres siehe Tabelle 4.

Die Mischungen aus Basispolymer und Kammpolymer wurden wie folgt hergestellt:

Polypropylen und Polystyrol im berechneten Verhältnis wurden als Granulat in der Knetkammer eines Brabender Plasticorder (Füllmenge 24 g) 15 Minuten lang bei einer Temperatur von 180°C gemischt.

Neben der entsprechenden Menge an Verträglichkeitsvermittler wurden 0,4 Gew.-% eines Stabilisatorgemisches aus je 25 % Irganox B 225 und J 3025 (Ciba-Geigy) und 50 % Jonol vorher zum Granulat zugegeben.

Aus den Polymermischungen wurden dann Testkörper hergestellt und folgende Polymereigenschaften nach den folgenden Methoden gemessen
E-Modul mit der Methode Zugversuch nach DIN 53455
Zugfestigkeit mit der Methode Zugversuch nach DIN 53455
Reißdehnung mit der Methode Zugversuch nach DIN 53455

**Tabelle 4**

| Mechanische Eigenschaften der mit erfindungsgemäßen Kammpolymeren kompatibilisierten Polypropylen/Polystyrol-Blends 85/15 | | | | | | | |
|---|---|---|---|---|---|---|---|
| | Pfropfcopolymer | | | | Blendeigenschaften | | |
| Bez. | M_{w} (kg/mol) | Pfropfastzahl/Molekül | Polystyrolgehalt (%) | Anteil im Blend (%) | E-Modul (MPa) | ^{δ}max^{a)} (N/mm²⁾ | ^{ε}R^{b)} (%) |
| B10 | - | - | - | 0 | 1197 | 28,68 | 18,0 |
| BG1 | 13,6 | 0,085 | 7 | 1 | 1300 | 31,80 | 10,5 |
| BG2 | 13,6 | 0,085 | 7 | 3 | 1206 | 29,38 | 9,6 |
| BG3 | 13,6 | 0,085 | 7 | 5 | 1181 | 32,12 | 8,7 |
| BG4 | 310 | 2,1 | 7 | 1 | 1516 | 35,02 | 8,1 |
| BG5 | 310 | 2,1 | 7 | 2,5 | 1472 | 36,02 | 6,2 |
| BG6 | 310 | 2,1 | 7 | 4 | 1545 | 37,33 | 6,6 |
| BG7 | 310 | 2,1 | 7 | 8 | 1564 | 38,63 | 4,6 |
| BG8 | 158 | 3,5 | 20 | 1 | 1418 | 35,28 | 5,6 |
| BG9 | 158 | 3,5 | 20 | 2,5 | 1476 | 39,78 | 6,4 |
| BG10 | 44,1 | 2,9 | 40 | 0,5 | 1330 | 36,01 | 6,1 |
| BG11 | 44,1 | 2,9 | 40 | 1,5 | 1274 | 36,79 | 7,3 |
| BG12 | 22,6 | 2,84 | 72 | 1 | 1174 | 32,84 | 6,1 |

| | | | | | | | |
|---|---|---|---|---|---|---|---|
| a) Zugfestigkeit | | | | | | | |
| b) Reißdehnung | | | | | | | |

Man erkennt, daß schon eine kleine Menge des erfindungsgemäßen Kammpolymer-Verträglichkeitsvermittlers beispielsweise 1 %, im Blend eine deutliche Erhöhung von Steifigkeit und Zugfestigkeit und eine Verringerung der Reißdehnung bewirkt. Dies deutet auf eine verbesserte Phasenhaftung hin, die auch in Morphologieuntersuchungen mit der Rasterelektronenmikroskopie gefunden wurde.

## Patentansprüche

1. Verfahren zur Herstellung von kammartigen Polymeren durch Copolymerisation von einem oder mehreren Monomeren a), ausgewählt aus der Gruppe bestehend aus olefinisch ungesättigten C₂- bis C₁₈-Kohlenwasserstoffen und vinylaromatischen Verbindungen, mit einem oder mehreren Monomeren b), ausgewählt aus der Gruppe bestehend aus langkettigen C₂₀- bis C₄₀-Alk-1-enen und Makromonomeren in Gegenwart von Katalysatoren, dadurch gekennzeichnet, daß als Katalysatoren Metallocenkatalysatoren verwendet werden.

2. Verfahren nach Anspruch 1, dadurch gekennzeichnet, daß als Metallocenkatalysatoren solche verwendet werden, die als aktive Bestandteile
A) Metallocenkomplexe der allgemeinen Formel (III) 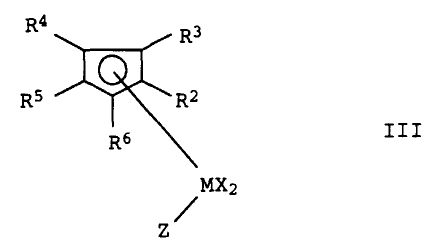 in der die Substituenten folgende Bedeutung haben:
M Titan, Zirkonium, Hafnium, Vanadium, Niob oder Tantal
X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁷ oder -NR⁷R⁸,
wobei
R⁷ und R⁸ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R² bis R⁶ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁹)₃ mit
R⁹ C₁- bis C₁₀-Alkyl, C₃- bis C₁₀-Cycloalkyl oder C₆- bis C₁₅-Aryl,
Z für X oder 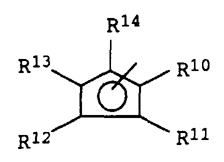 steht,
wobei die Reste
R¹⁰ bis R¹⁴ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁵)₃ mit
R¹⁵ C₁- bis C₁₀-Alkyl, C₆- bis C₁₅-Aryl oder C₃- bis C₁₀-Cycloalkyl,
oder wobei die Reste R⁵ und Z gemeinsam eine Gruppierung - R¹⁶-A- bilden, in der
R¹⁶ 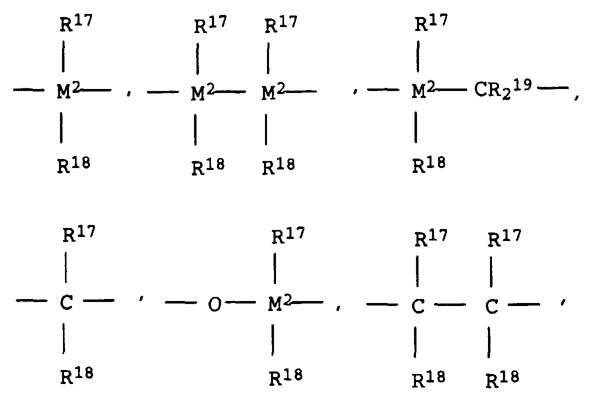
= BR¹⁷, = AlR¹⁷, -Ge-, -Sn-, -O-, -S-, = SO, = SO₂, = NR¹⁷, = CO, = PR¹⁷ oder = P(O)R¹⁷ ist, wobei
R¹⁷, R¹⁸ und R¹⁹ gleich oder verschieden sind und ein Wasserstoffatom, ein Halogenatom, eine C₁-C₁₀-Alkyl-gruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenyl-gruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
M² Silicium, Germanium oder Zinn ist,
A ― O ―, ― S ―, 〉NR²⁰ oder 〉PR²⁰ bedeuten, mit
R²⁰ C₁- bis C₁₀-Alkyl, C₆- bis C₁₅-Aryl, C₃- bis C₁₀-Cycloalkyl, Alkylaryl oder Si(R²¹)₃,
R²¹ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁵ und R¹³ gemeinsam eine Gruppierung -R¹⁶- bilden und
B) eine metalloceniumionenbildende Verbindung enthalten.

3. Verfahren nach den Ansprüchen 1 oder 2, dadurch gekennzeichnet, daß als Monomere a) C₂- bis C₁₀-Alk-1-ene und als Monomere b) Makromonomere aus vinylaromatischen Monomeren verwendet werden.

4. Kammartige Polymere erhältlich durch Copolymerisation von einem oder mehreren Monomeren a), ausgewählt aus der Gruppe bestehend aus olefinisch ungesättigten C₂- bis C₁₈-Kohlen-wasserstoffen und vinylaromatischen Verbindungen, mit einem oder mehreren Monomeren b), ausgewählt aus der Gruppe bestehend aus langkettigen C₂₀- bis C₄₀-Alk-1-enen und Makromonomeren in Gegenwart von Katalysatoren, wobei als Katalysatoren Metallocenkatalysatoren verwendet werden.

5. Kammartige Polymere nach Anspruch 4, wobei als Metallocenkatalysatoren solche verwendet werden, die als aktive Bestandteile
A) Metallocenkomplexe der allgemeinen Formel (III) 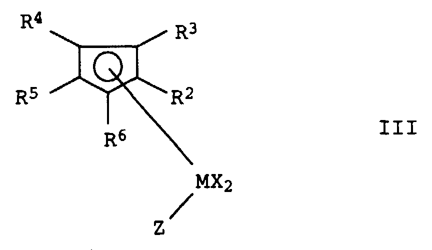 in der die Substituenten folgende Bedeutung haben:
M Titan, Zirkonium, Hafnium, Vanadium, Niob oder Tantal
X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁷ oder -NR⁷R⁸,
wobei
R⁷ und R⁸ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R² bis R⁶ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁹)₃ mit
R⁹ C₁- bis C₁₀-Alkyl, C₃- bis C₁₀-Cycloalkyl oder C₆- bis C₁₅-Aryl,
Z für X oder 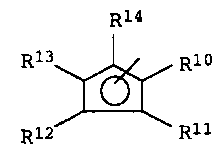 steht,
wobei die Reste
R¹⁰ bis R¹⁴ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁵)₃ mit
R¹⁵ C₁- bis C₁₀-Alkyl, C₆- bis C₁₅-Aryl oder C₃- bis C₁₀-Cycloalkyl,
oder wobei die Reste R⁵ und Z gemeinsam eine Gruppierung - R¹⁶-A- bilden, in der
R¹⁶ 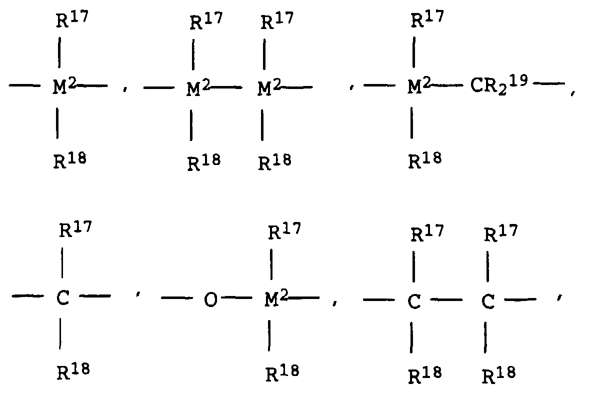
= BR¹⁷, = AlR¹⁷, -Ge-, -Sn-, -O-, -S-, = SO, = SO₂, = NR¹⁷, = CO, = PR¹⁷ oder = P(O)R¹⁷ ist, wobei
R¹⁷, R¹⁸ und R¹⁹ gleich oder verschieden sind und ein Wasserstoffatom, ein Halogenatom, eine C₁-C₁₀-Alkyl-gruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenyl-gruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
M² Silicium, Germanium oder Zinn ist,
A ― O ―, ― S ―, 〉NR²⁰ oder 〉PR²⁰ bedeuten, mit
R²⁰ C₁- bis C₁₀-Alkyl, C₆- bis C₁₅-Aryl, C₃- bis C₁₀-Cycloalkyl, Alkylaryl oder Si(R²¹)₃,
R²¹ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁵ und R¹³ gemeinsam eine Gruppierung -R¹⁶- bilden und
B) eine metalloceniumionenbildende Verbindung enthalten.

6. Kammartige Polymere nach den Ansprüchen 4 oder 5, wobei als Monomere a) C₂- bis C₁₀-Alk-1-ene und als Monomere b) Makromonomere aus vinylaromatischen Monomeren verwendet werden.

7. Verwendung von kammartigen Polymeren gemäß den Ansprüchen 5 bis 6 als Verträglichkeitsvermittler in Polymermischungen.

8. Verwendung von kammartigen Polymeren nach Anspruch 7, wobei als Polymermischungen Mischungen aus Olefinpolymerisaten und Polymerisaten aus vinylaromatischen Verbindungen verwendet werden.

9. Polymermischungen, enthaltend kammartige Polymere gemäß den Ansprüchen 4 bis 6.

10. Polymermischungen nach Anspruch 9, enthaltend 0,001 bis 50 Gew.-% kammartige Polymere gemäß den Ansprüchen 4 bis 6.
